# EUROPÄISCHE PATENTSCHRIFT

(11) **EP 0 360 189 B1**
(45) Veröffentlichungstag und Bekanntmachung des Hinweises auf die Patenterteilung: **18.11.1993**
(21) Anmeldenummer: 89117212.4
(22) Anmeldetag: 18.09.1989
(51) Int. Cl.: B29C 45/16, B29C 45/17

(54) **Spritzdüse für eine Spritzgussmaschine**
Injection nozzle for an injection-moulding machine
Buse d'injection pour une machine à mouler par injection

(30) Priorität: 19.09.1988 AT 2284/88
(43) Veröffentlichungstag der Anmeldung: 28.03.1990
(73) Patentinhaber: Engel Maschinenbau Gesellschaft m.b.H., A-4311 Schwertberg (AT)
(72) Erfinder: Ebenhofer, Karl, A-4320 Perg (AT); Kühberger, Friedrich, A-4351 Saxen (AT); Sturm, Leo, A-4311 Schwertberg (AT)
(74) Vertreter: Hofinger, Engelbert, DDr.

(56) Entgegenhaltungen:
- DE-A- 3 305 931
- DE-A- 3 519 921
- FR-A- 2 217 147
- US-A- 4 117 955

## Beschreibung

Die Erfindung bezieht sich auf eine Spritzgußdüse für eine Spritzgußmaschine zur Herstellung von aus mehreren Kunststoffkomponenten bestehenden Spritzlingen und von hohlen Spritzlingen, mit einem Düsenkörper und einer Einspritzöffnung, einen im Düsenkörper axial verschiebbaren Hülsenkörper mit einer kegelförmigen Mündung und einer in den Hülsenkörper ragenden Schließnadel.

Aus der AT-PS 342 287 ist ein Verfahren zur Herstellung eines Formkörpers in Spritzguß bekannt geworden, bei dem zwei verschiedene Kunststoffmaterialien aus zwei Spritzzylindern in eine gemeinsame Form gespritzt werden, sodaß ein Spritzling erhalten wird, der eine Außenschicht und ein Kernmaterial aufweist. Die Düse ist dabei als Zwei-Wege-Ventil ausgebildet und derart umschaltbar, daß entweder Kunststoffmaterial aus dem einen oder dem anderen Massezylinder in das Formwerkzeug eingespritzt werden kann.

Ähnliche Verfahren beschreiben die britischen Patentschriften 1219097 und 1332883.

Aus der DE-OS 2342789 ist eine Vorrichtung zur diskontinuierlichen Herstellung von Mehrschichtformkörpern bekannt, bei der im Düsenkörper eine axial verschiebbare Hülse und innerhalb der Hülse eine axial verschiebbare Schließnadel vorgesehen sind. Mittels dieser Vorrichtung können ebenfalls Spritzlinge aus verschiedenen Kunststoffkomponenten hergestellt werden.

Ebenso zeigt die DE-OS 2445112 eine Spritzgußdüse, die an drei Plastifizierzylinder angeschlossen ist und die verschiebbare Hülsen aufweist, die abwechselnd einen Düsenkanal freigeben oder versperren.

Weiters ist es bekannt, während des Spritzgießvorganges in die Form ein Gas, im allgemeinen Stickstoff, einzublasen, um derart einen Spritzling mit Hohlräumen zu schaffen, wodurch Kunststoffmaterial eingespart werden kann.

Aufgabe der Erfindung ist es, eine Spritzgußdüse der eingangs erwähnten Art zu schaffen, mit der wahlweise zwei Kunststoffkomponenten oder eine Kunststoffkomponente und ein Gas einer Spritzform zugeführt werden können, und die sich durch einen einfachen Aufbau auszeichnet und weniger bewegliche Teile benötigt als die bekannten Vorrichtungen dieser Art.

Die erfindungsgemäße Aufgabe wird dadurch gelöst, daß die Schließnadel im Düsenkörper unbeweglich im ständigen Abstand von der Einspritzöffnung angeordnet ist, während der Hülsenkörper über dem Abstand zwischen der Einspritzöffnung und der Spitze der Schließnadel verschiebbar ist.

Vorteilhaft ist vorgesehen, daß die Schließnadel und der Hülsenkörper einen Ringkanal begrenzen und daß der Ringkanal an eine Gas- oder Flüssigkeitszufuhrleitung angeschlossen ist. In diesem Fall kann je nach Stellung des Hülsenkörpers entweder Kunststoff aus der Düse gespritzt oder Gas oder Flüssigkeit in das Werkzeug eingelassen werden. Bei entsprechender Dimensionierung des Ringkanals zwischen der Schließnadel und dem Düsenkörper wäre auch die Zuführung einer zweiten Kunststoffkomponente zur Einspritzöffnung möglich.

Das Verschieben des Hülsenkörpers erfolgt vorteilhaft über einen seitlich angreifenden Hebel.

Um eine bessere Führung des Hülsenkörpers zu erzielen, ist vorteilhaft vorgesehen, daß die Schließnadel an ihrem Umfang und im axialen Abstand mit radial abstehenden Führungsnoppen für den Hülsenkörper versehen ist.

In einem Ausführungsbeispiel der Erfindung ragt die Gaszufuhrleitung seitlich in den Hülsenkörper und macht dessen axiale Verschiebebewegung mit.

Vorteilhaft ist vorgesehen, daß der Hülsenkörper in einem einen vorderen Düsenraum abgrenzenden Führungsteil geführt ist, der Durchlaßkanäle für den plastifizierten Kunststoff aufweist, wobei sich die Durchlaßkanäle durch den Düsenkörper fortsetzen und den vorderen Düsenraum mit einem hinteren Düsenraum, der an den Schneckenzylinder anschließt, verbinden.

In einem weiteren Ausführungsbeispiel der Erfindung ist vorgesehen, daß der Hülsenkörper in einer Mittelstellung zwischen der Einspritzöffnung und der Spitze der Schließnadel arretierbar ist.

Dadurch können gleichzeitig zwei Kunststoffkomponenten oder gleichzeitig Kunststoff und Gas oder Flüssigkeit in die Form eingespritzt bzw. eingeblasen werden.

Ein weiteres Ausführungsbeispiel der Erfindung sieht vor, daß der Hülsenkörper mit einer seitlichen Durchbrechung versehen ist, die den Durchtritt von Kunststoffmasse in den Mittelkanal des Hülsenkörpers ermöglicht und daß in den Düsenkanal, in dem sich der Hülsenkörper befindet, zwei Nebenkanäle münden, deren Austrittsöffnungen in der Verschieberichtung des Hülsenkörpers versetzt sind.

Auf diese Art und Weise wird eine äußerst betriebssichere Zwei-Komponenten-Spritzdüse mit einem relativ geringen konstruktiven Aufwand erzielt.

Um bei einer derartigen Spritzgußdüse das gleichzeitige Einspritzen der beiden Kunststoffkomponenten zu ermöglichen, ist in einem weiteren Ausführungsbeispiel vorgesehen, daß der Hülsenkörper an seinem Mantel eine Abflachung oder Einkerbung im Bereich der Austrittsöffnung des vorderen Nebenkanals aufweist.

Nachfolgend werden zwei Ausführungsbeispiele der Erfindung an Hand der Figuren der beiliegenden Zeichnungen eingehend beschrieben.

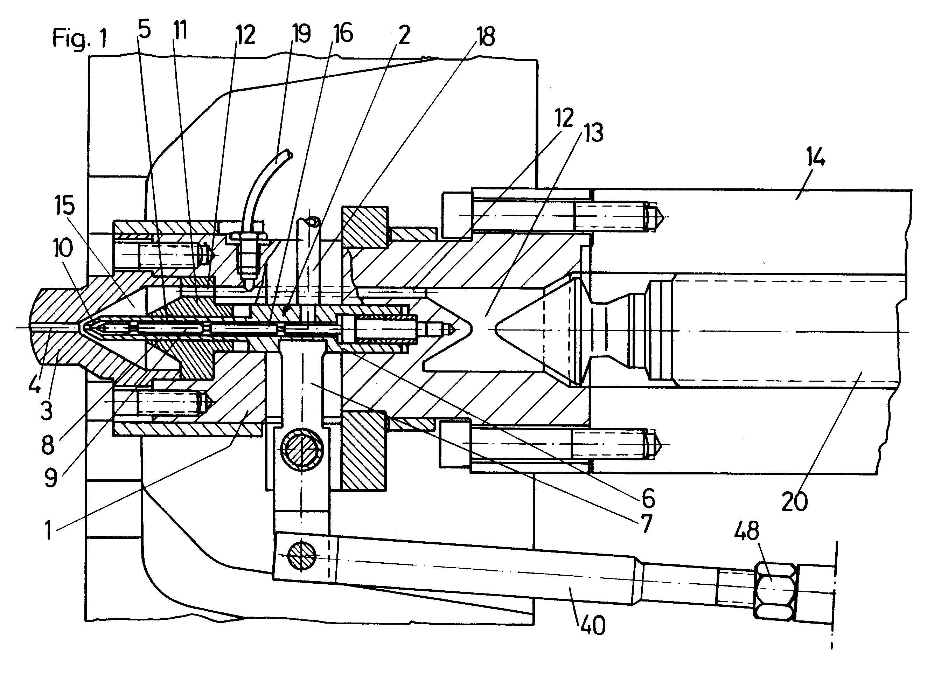

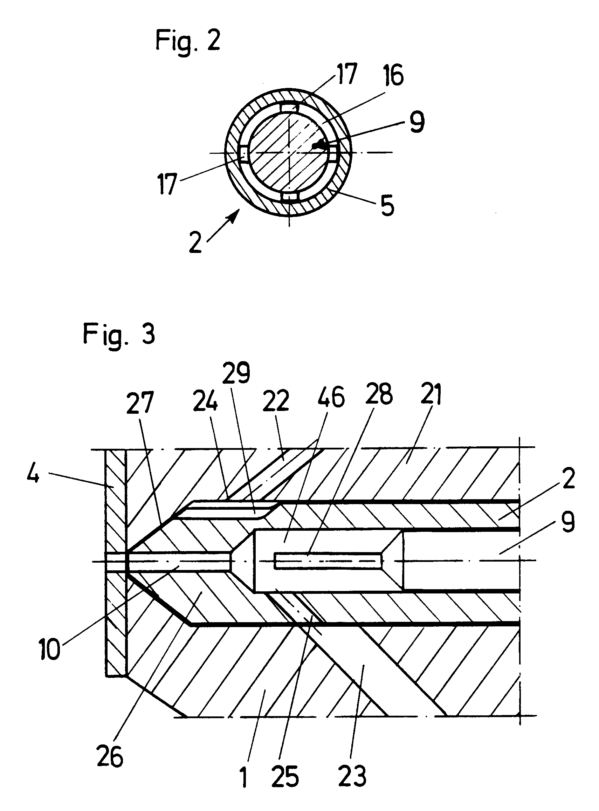

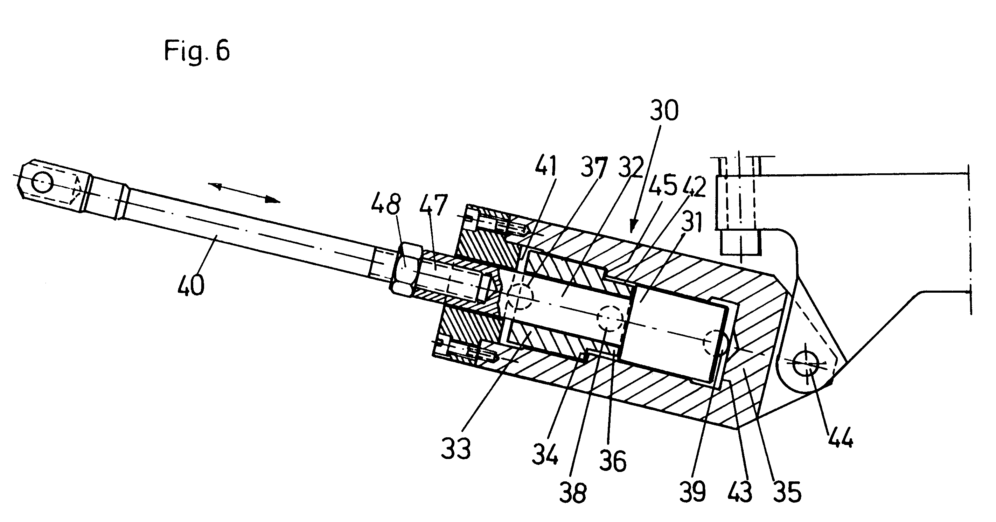

Die Fig. 1 zeigt einen Längsschnitt durch eine erfindungsgemäße Spritzgußdüse, die Fig. 2 zeigt einen Querschnitt des Hülsenkörpers und der Nadel, die Fig. 3 bis 5 zeigen Längsschnitte durch ein weiteres Ausführungsbeispiel der Erfindung, wobei der Hülsenkörper in drei möglichen Betriebsstellungen gezeigt ist und die Fig. 6 zeigt einen Schnitt durch einen Betätigungszylinder für die Hülsenbewegung.

Die erfindungsgemäße Spritzgußdüse weist einen Düsenkörper 1 auf, in dem ein Hülsenkörper 2 axial verschiebbar angeordnet ist. Vorne ist der Düsenkörper 1 mit einem Düsenkopf 3 versehen, in dem sich auch die Einspritzöffnung 4 befindet.

Der Hülsenkörper 2 weist einen schmäleren vorderen Bereich 5 und einen hinteren dickeren Bereich 6 auf. Am dickeren Bereich 6 greift ein Hebel 7 an, der über eine Stange 40 kippbar ist und somit die Axialbewegung des Hülsenkörpers 2 bewirkt.

Die Verschiebung des Hülsenkörpers 2 erfolgt über eine Hydraulik-Zylindereinheit 30. Das Gestänge 40 ist über eine Kolbenstange 32 mit einem Kolben 31 verbunden, der sich im Zylinder 35 der Zylindereinheit 30 befindet. Kolbenstange 32 und Kolben 31 sind vorteilhaft einstückig ausgeführt.

Im Zylinder 35 befindet sich weiters ein Anschlagkolben 33. Der Anschlagkolben 33 ist als Ringkolben ausgeführt und umgibt die Kolbenstange 32.

An seinem rechten Ende ist der Anschlagkolben 33 mit einem schmäleren Ansatz 36 versehen, wodurch eine Ringschulter 34 gebildet wird. Im Zylinder 35 ist korrespondierend zu dieser Ringschulter 34 ein Anschlagring 45 ausgebildet.

Der Zylinder 35 weist drei Anschlußöffnungen 37,38,39 auf. Soll die Stange 40 nach links bewegt werden, tritt Drucköl über die Anschlußöffnung 39 in den Zylinder 35 ein. Der Kolben 31 wird dadurch nach links bewegt und schiebt den Anschlagkolben 33 vor sich her, bis der Hülsenkörper 2 die Nadel 9 abdichtet, wodurch der Weg des Kolbens 31 begrenzt wird. Durch die Umlenkung des Hebels 7 befindet sich der Hülsenkörper 2 nun in der hintersten Stellung. Damit der Hülsenkörper 2 immer sicher abschließt, befinden sich die Kolben 31,33 auch in ihrer Endstellung immer im Abstand vom Zylinderboden 41,43.

Soll der Hülsenkörper 2 in seine vorderste Stellung gebracht werden, das heißt, die Stange 40 nach rechts bewegt werden, wird Hydraulikflüssigkeit durch die Anschlußöffnung 38 in den Zylinder 35 eingelassen während gleichzeitig die vor dem Kolben 31 befindliche Hydraulikflüssigkeit wiederum durch die Anschlußöffnung 39 ausfließen kann. Die bei der Anschlußöffnung 38 eintretende Hydraulikflüssigkeit tritt erst in einem vom Ansatz 36 und der Zylinderwand gebildeten Ringkanal 42 ein und schiebt dann den Kolben 31 nach rechts. Die Kolbenstange 40 befindet sich nun in ihrer äußersten rechten Position und der Hülsenkörper in der äußersten linken, das heißt, vorderen Position.

Um den Hülsenkörper 2 in eine genau definierte Mittelposition zu bringen, wird Hydraulikflüssigkeit durch die Anschlußöffnung 37 in den Zylinder 35 gepumpt und gleichzeitig Hydraulikflüssigkeit durch die Anschlußöffnung 36,39 ausgelassen. Der Anschlagkolben 33 wird nun nach rechts bewegt, bis er mit seiner Ringschulter 34 am korrespondierenden Anschlagring 33 des Zylinders 35 anliegt. Der Kolben 31 wird dadurch in eine fixe Position im Zylinder 35 gebracht. Die mit dem Kolben 31 verbundene Stange 40 wird dadurch bei diesem Arbeitsgang jeweils in einer vorgegebenen Mittelstellung exakt gehalten und somit ist die exakte Position des Hülsenkörpers 2 gewährleistet.

Die Einstellung der beiden Endlagen des Kolbens 31 und des Anschlagkolbens 33 erfolgt dabei über das Gewinde 47 der Stange 40 und die Gegenmutter 48. Der Zylinder 35 ist vorzugsweise mittels eines Gelenkes 44 am Massezylinderklemmstück gelagert.

Der Hülsenkörper 2 weist einen mittigen Kanal 8 auf, in den eine Schließnadel 9 ragt. Die Schließnadel 9 ist in bezug auf den Düsenkörper 1 starr angeordnet.

Der Hülsenkörper 2 ist an seinem vorderen Ende kappenartig und mit einer Durchtrittsöffnung 10 ausgebildet. Sein vorderer schmälerer Bereich 5 ist in einem Führungsteil 11 geführt, welcher Durchlaßkanäle 12 für den plastifizierten Kunststoff aufweist. Die Durchlaßkanäle 12 führen ebenso durch den Düsenkörper 1 und verbinden so den hinteren Düsenraum 13, der unmittelbar an den Schneckenzylinder 14 anschließt, mit einem vorderen Düsenraum 15, der vom Düsenkopf 3 und dem Führungsteil 11 abgegrenzt wird.

Da der Durchmesser der Schließnadel 9 geringer ist als der Durchmesser des Kanals 8 des Hülsenkörpers 2, ist zwischen der Schließnadel 9 und dem Hülsenkörper 2 ein Ringspalt 16.

Um die Führung des Hülsenkörpers 2 auf der Schließnadel 9 zu verbessern, ist die Schließnadel 9 mit seitlichen Führungsnoppen 17 versehen, an denen der Hülsenkörper 2 geführt ist. Die Noppen 17 umgeben, wie aus der Fig. 2 ersichtlich, die Schließnadel 9 sternförmig und behindern auf diese Art und Weise nicht den Durchtritt eines Gases.

Die Gaszufuhrleitung 18 ist beweglich und mündet seitlich in den Hülsenkörper 2. Auf diese Art und Weise kann die Gaszufuhrleitung 18 die Axialbewegung des Hülsenkörpers 2 mitmachen.

In einen der Kanäle 12 ragt ein Druckaufnohmer 19. Im Ausführungsbeispiel sind sechs Durchlaßkanäle 12 vorgesehen, doch ist die Erfindung nicht auf diese Anzahl beschränkt.

Befindet sich der Hülsenkörper 2 in seiner rechten Endstellung, verschließt die Spitze der Schließnadel 9 die Durchlaßöffnung 10 des Hülsenkörpers 2 und gleichzeitig ist die Einspritzöffnung 4 freigegeben. Plastifizierter Kunststoff kann nun unter dem von der Schnecke 20 ausgeübten Druck vom Düsenraum 13 über die Durchlaßkanäle 12 in den vorderen Düsenraum 15 gelangen und von dort über die Einspritzöffnung 4 in die Spritzgießform entweichen.

Wird derHülsenkörper 2 in seine äußerst linke Stellung, d.h. vordere Endstellung gebracht, verschließt er mit seinem vorderen Ende die Einspritzöffnung4gegenüber dem vorderen Düsenraum 15. Nun kann ein Gas, insbesondere Stickstoff,über die Gaszufuhrleitung 18 und weiter über den Ringspalt 16 durch die Öffnung 10 und die Einspritzöffnung 4 in das Formwerkzeug geblasen werden.

Im Ausführungsbeispiel beträgt der Hüb des Hülsenkörpers lediglich sechs Millimeter, sodaß ein sehr rasches Umschalten vom Kunststoffeinspritzen auf Gaseinblasen möglich ist.

In der in der Fig. 1 gezeigten Mittelstellung wäre das gleichzeitige Einspritzen von Kunststoff in die Form und Einblasen von Gas möglich.

Die Fig. 3 bis 5 zeigen ein weiteres Ausführungsbeispiel der Erfindung, das insbesondere für das Einspritzen zweier Kunststoffkomponenten geeignet ist. Wiederum weist die Spritzgußdüse einen Düsenkörper 1 und einen darin axial verschiebbar geführten Hülsenkörper 2 auf. In den Hülsenkörper 2 ragt wiederum eine Schließnadel 9, jedoch ist die Schließnadel 9 diesmal im Hülsenkörper 2 mit Passung geführt, d.h., es gibt keinen Ringkanal zwischen der Schließnadel 9 und dem Hülsenkörper 2.

In den Düsenkanal 21, in dem der Hülsenkörper 2 geführt ist, münden zwei Nebenkanäle 22, 23, die in herkömmlicher Art und Weise an Spritzzylinder angeschlossen sind.

Die Austrittsöffnungen 24,25 der Nebenkanäle 22,23 sind dabei in der Verschieberichtung des Hülsenkörpers 2 versetzt, sodaß die Austrittsöffnung 24 näher zur Einspritzöffnung 4 angeordnet ist als die Austrittsöffnung 25.

Das vordere Ende 26 des Hülsenkörpers 2 ist kegelförmig ausgeführt und weist wiederum eine Durchlaßöffnung 10 auf. An der Einspritzöffnung 4 ist ein zum vorderen Ende 26 des Hülsenkörpers 2 korrespondierender kegelförmiger Paßsitz 27 ausgearbeitet, sodaß der Hülsenkörper 2 in der vorderen Stellung an diesem satt und dichtend anliegt.

Befindet sich der Hülsenkörper 2 in der in der Fig. 3 gezeigten Stellung, ist der vordere Nebenkanal 22 geschlossen und eine Kunststoffkomponente kann durch den Nebenkanal 23 in den Hülsenkanal 46 und durch die öffnung 10 und die Einspritzöffnung 4 in das Formwerkzeug eingespritzt werden.

Die gegenteilige Stellung ist in der Fig. 5 gezeigt. Hierbei ist der Nebenkanal 23 bzw. dessen Austrittsöffnung 25 vom Mantel des Hülsenkörpers 2 abgedeckt und die Spitze 26 des Hülsenkörpers 2 befindet sich hinter der Austrittsöffnung 24 des Nebenkanals 22. Kunststoff einer zweiten Kunststoffkomponente kann nun über den Nebenkanal 22,den Düsenkanal 21 und die Einspritzöffnung 4 in das Formwerkzeug eingespritzt werden. Der zylinderförmige Zapfen 28 der Nadel 9 ragt dabei in die öffnung 10 und stößt eventuell darin befindliche Kunststoffreste aus.

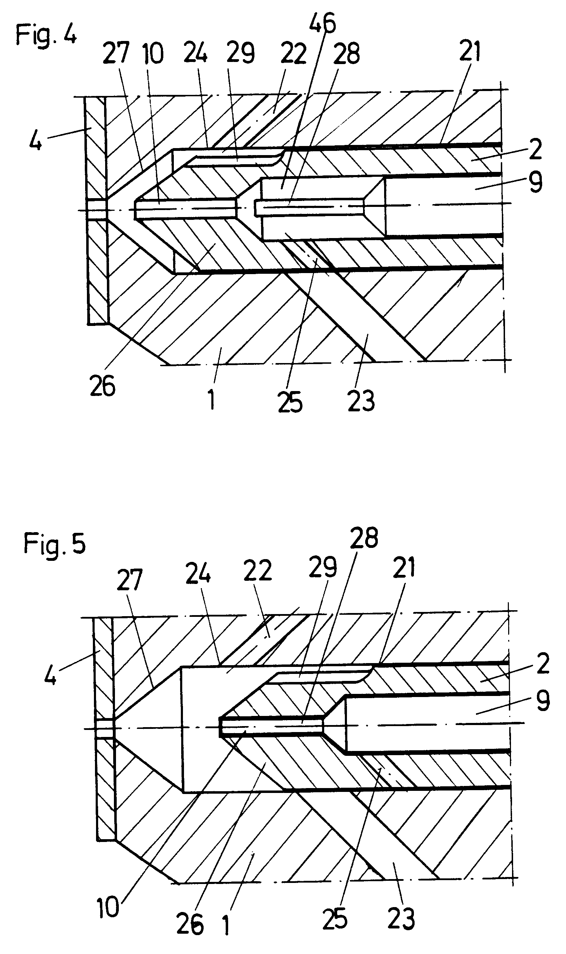

Die Fig. 4 zeigt eine Mittelstellung, die das parallele Einspritzen beider Kunststoffkomponenten ermöglicht. In diesem Fall sind beide Austrittsöffnungen 24,25 der Nebenkanäle 22,23 zumindestens teilweise freigegeben,und ebenso ist die öffnung 10 frei.

Um das parallele Einspritzen zu ermöglichen, ist der Hülsenkörper 2 an seinem Mantel mit einer Einkerbung 29 versehen, die sich im Bereich der Austrittsöffnung 24 des oberen Nebenkanales befindet. Plastifizierter Kunststoff gelangt dadurch aus dem Nebenkanal 22 über die Einkerbung 29 in den Hohlraum, der von der Spitze 26 des Hülsenkörpers 2 und der Wand 27 des Düsenkanals 21 abgegrenzt wird.

## Patentansprüche

1. Spritzgußdüse für eine Spritzgußmaschine zur Herstellung von aus mehreren Kunststoffkomponenten bestehenden Spritzlingen und von hohlen Spritzlingen, mit einem Düsenkörper und einer Einspritzöffnung, einen im Düsenkörper axial verschiebbaren Hülsenkörper mit einer kegelförmigen Mündung und einer in den Hülsenkörper ragenden Schließnadel, dadurch gekennzeichnet, daß die Schließnadel (9) im Düsenkörper (1) unbeweglich im ständigen Abstand von der Einspritzöffnung (4) angeordnet ist, während der Hülsenkörper (2) über dem Abstand zwischen der Einspritzöffnung (4) und der Spitze der Schließnadel (9) verschiebbar ist.

2. Spritzgußdüse nach Anspruch 1, dadurch gekennzeichnet, daß die Schließnadel (9) und der Hülsenkörper (2) einen Ringkanal (8) begrenzen und daß der Ringkanal (8) an eine Gas- oder Flüssigkeitszufuhrleitung (18) angeschlossen ist.

3. Spritzgußdüse nach Anspruch 1, dadurch gekennzeichnet, daß zum Verschieben des Hülsenkörpers (2) ein seitlich angreifender Hebel vorgesehen ist.

4. Spritzgußdüse nach Anspruch 1, dadurch gekennzeichnet, daß die Schließnadel (9) an ihrem Umfang und im axialen Abstand mit radial abstehenden Führungsnoppen (17) für den Hülsenkörper (2) versehen ist.

5. Spritzgußdüse nach Anspruch 2, dadurch gekennzeichnet, daß die Gas- oder Flüssigkeitszufuhrleitung (18) seitlich in den Hülsenkörper (2) ragt und dessen axiale Verschiebebewegung mitmacht.

6. Spritzgußdüse nach Anspruch 1, dadurch gekennzeichnet, daß der Hülsenkörper (2) in einem einen vorderen Düsenraum (15) abgrenzenden Führungsteil (11) geführt ist, der Durchlaßkanäle (12) für den plastifizierten Kunststoff aufweist.

7. Spritzgußdüse nach Anspruch 1 und 6, dadurch gekennzeichnet, daß sich aie Durchlaßkanäle (12) durch den Düsenkörper (1) fortsetzen und den vorderen Düsenraum (15) mit einem hinteren Düsenraum (13), der an den Schneckenzylinder anschließt, verbinden.

8. Spritzgußdüse nach Anspruch 1, dadurch gekennzeichnet, daß der Hülsenkörper (2) in einer Mittelstellung zwischen der Einspritzöffnung (4) und der Spitze der Schließnadel (9) arretierbar ist.

9. Spritzgußdüse nach Anspruch 1, dadurch gekennzeichnet, daß der Hülsenkörper (2) mit einer seitlichen Durchbrechung (25) versehen ist, die den Durchtritt von Kunststoffmasse in den Hülsenkanal (46) des Hülsenkörpers (2) ermöglicht.

10. Spritzgußdüse nach Anspruch 1, dadurch gekennzeichnet, daß in den Düsenkanal (21), in dem sich der Hülsenkörper (2) befindet, zwei Nebenkanäle (22,23) münden, deren Austrittsöffnungen (24,25) in der Verschieberichtung des Hülsenkörpers (2) versetzt sind.

11. Spritzgußdüse nach den Ansprüchen 9 und 10, dadurch gekennzeichnet, daß der Hülsenkörper (2) an seinem Mantel eine Abflachung oder Einkerbung (29) im Bereich der Austrittsöffnung (24) des vorderen Nebenkanals (22) aufweist.

## Claims

1. An injection-moulding nozzle for an injection-moulding machine for the production of mouldings comprising a plurality of plastics components and hollow mouldings, comprising a nozzle body and an injection opening, a sleeve body axially displaceable in the nozzle body and having a conical mouth, and a closing needle projecting into the sleeve body, characterised in that the closing needle (9) is arranged in the nozzle body (1) immovably at a constant spacing from the injection opening (4) while the sleeve body (2) is displaceable over the spacing between the injection opening (4) and the tip of the closing needle (9).

2. An injection-moulding nozzle according to claim 1 characterised in that the closing needle (9) and the sleeve body (2) define an annular passage (8) and that the annular passage (8) is connected to a gas or liquid feed line (18).

3. An injection-moulding nozzle according to claim 1 characterised in that for displacement of the sleeve body (2) there is provided a lever engaging laterally thereon.

4. An injection-moulding nozzle according to claim 1 characterised in that the closing needle (9) is provided at its periphery and at an axial spacing with radially projecting guide knobs (17) for the sleeve body (2).

5. An injection-moulding nozzle according to claim 2 characterised in that the gas or liquid feed line (18) projects laterally into the sleeve body (2) and also moves with the axial displacement thereof.

6. An injection-moulding nozzle according to claim 1 characterised in that the sleeve body (2) is guided in a guide portion (11) which delimits a front nozzle chamber (15) and which has communicating passages (12) for the plasticised plastics material.

7. An injection-moulding nozzle according to claim 1 and claim 6 characterised in that the communicating passages (12) continue through the nozzle body (1) and communicate the front nozzle chamber (15) with a rear nozzle chamber (13) which adjoins the screw cylinder.

8. An injection-moulding nozzle according to claim 1 characterised in that the sleeve body (2) can he arrested in a middle position between the injection opening (4) and the tip of the closing needle (9).

9. An injection-moulding nozzle according to claim 1 characterised in that the sleeve body (2) is provided with a lateral opening (25) therethrough, which permits plastics material to pass through into the sleeve passage (46) of the sleeve body (2).

10. An injection-moulding nozzle according to claim 1 characterised in that two secondary passages (22, 23) open into the nozzle passage (21) in which the sleeve body (2) is disposed, the outlet openings (24, 25) of the secondary passages (22, 23) being displaced in the direction of movement of the sleeve body (2).

11. An injection-moulding nozzle according to claim 9 and 10 characterised in that at its periphery the sleeve body (2) has a flat or notch (29) in the region of the outlet opening (24) of the front secondary passage (22).

## Revendications

1. Buse d'injection pour une machine de moulage par injection servant à la fabrication de pièces moulées constituées de plusieurs matières plastiques composantes et également de pièces moulées creuses, comportant un corps de buse et un orifice d'injection, un corps en forme de fourreau déplaçable axialement dans le corps de buse et pourvu d'une embouchure de forme conique et d'une aiguille de fermeture pénétrant dans le corps de buse, caractérisée en ce que l'aiguille de fermeture (9) est disposée dans le corps de buse (1) sans possibilité de déplacement et à une distance constante d'espacement de l'orifice d'injection (4), tandis que le corps formant fourreau (2) est mobile en translation sur la distance d'espacement entre l'orifice d'injection (4) et la pointe de l'aiguille de fermeture (9).

2. Buse d'injection selon la revendication 1, caractérisée en ce que l'aiguille de fermeture (9) et le corps formant fourreau (2) délimitent un canal annulaire (8) et en ce que ce canal annulaire (8) est relié à un conduit (18) d'admission de gaz ou de liquide.

3. Buse d'injection selon la revendication 1, caractérisée en ce que, pour le déplacement du corps formant fourreau (2), il est prévu un levier agissant latéralement.

4. Buse d'injection selon la revendication 1, caractérisée en ce que l'aiguille de fermeture (9) est pourvue, sur son pourtour et avec espacement axial, de protubérances (17), faisant saillie radialement, pour le guidage du corps formant fourreau (2).

5. Buse d'injection selon la revendication 2, caractérisée en ce que le conduit (18) d'admission de gaz ou de liquide pénètre latéralement dans le corps formant fourreau (2) et participe à son mouvement de translation axiale.

6. Buse d'injection selon la revendication 1, caractérisée en ce que le corps formant fourreau (2) est guidé dans une partie de guidage (11) délimitant un volume avant (15) dans la buse et qui comporte des canaux (17) de passage de la matière plastique plastifiée.

7. Buse d'injection selon une des revendications 1 et 6, caractérisée en ce que les canaux de passage (12) se prolongent à travers le corps de buse (1) et relient le volume avant (15) de la buse avec un volume arrière (13) de la buse, qui est reliée au cylindre à vis sans fin.

8. Buse d'injection selon la revendication 1, caractérisée en ce que le corps formant fourreau (2) peut être arrêté dans une position centrale entre l'orifice d'injection (4) et la pointe de l'aiguille de fermeture (9).

9. Buse d'injection selon la revendication 1, caractérisée en ce que le corps formant fourreau (2) est pourvu d'un évidement latéral (25), qui permet le passage de la masse de matière plastique dans le canal (46) du corps formant fourreau (2).

10. Buse d'injection selon la revendication 1, caractérisée en ce que dans le canal de buse (21), dans lequel est situé le corps formant fourreau (2), débouchent deux canaux secondaires (22, 23) dont les orifices de sortie (24, 25) sont décalés dans le sens de translation du corps formant fourreau (2).

11. Buse d'injection selon les revendications 9 et 10, caractérisée en ce que le corps formant fourreau (2) comporte, sur son pourtour, un méplat ou une encoche (29) dans la zone de l'ouverture (24) de sortie du canal secondaire avant (22).
